# EUROPÄISCHE PATENTSCHRIFT

(11) **EP 2 831 160 B1**
(45) Veröffentlichungstag und Bekanntmachung des Hinweises auf die Patenterteilung: **23.03.2016**
(21) Anmeldenummer: 13712767.6
(22) Anmeldetag: 26.03.2013
(51) Int. Cl.: C08K 5/00, C08K 5/47, A01N 43/78, A61K 31/381, C08L 27/06

(54) **STABILE ZUSAMMENSETZUNGEN AUS THIABENDAZOL UND IODHALTIGEN FUNGIZIDEN**
STABLE COMPOSITIONS OF THIABENDAZOLE AND IODINE-CONTAINING FUNGICIDES
COMPOSITIONS STABLES CONSTITUÉES DE THIABENDAZOLE ET DE FONGICIDES IODÉS

(30) Priorität: 28.03.2012 EP 12161923; 23.04.2012 EP 12165125
(43) Veröffentlichungstag der Anmeldung: 04.02.2015
(73) Patentinhaber: Lanxess Deutschland GmbH, 51369 Leverkusen (DE)
(72) Erfinder: UHR, Hermann, 51373 Leverkusen (DE); BÖTTCHER, Andreas, 50859 Köln (DE); JAETSCH, Dr. Thomas, 50933 Köln (DE)
(86) Internationale Anmeldenummer: PCT/EP2013/056402
(87) Internationale Veröffentlichungsnummer: WO 2013/144145

(56) Entgegenhaltungen:
- WO-A1-2012/024097
- WO-A2-92/19104
- DATABASE WPI Week 201205 Thomson Scientific, London, GB; AN 2011-C57590 XP002712055, -& ES 2 351 836 A1 (MICROLITIX CONTROL MICROBIOLOGICO) 11. Februar 2011 (2011-02-11)

## Beschreibung

Die vorliegende Erfindung betrifft stabile Zusammensetzungen für die fungizide Ausrüstung von thermoplastischen Polymeren, insbesondere PVC, enthaltend Thiabendazol, mindestens ein iodhaltiges Fungizid und mindestens ein Epoxid und gegebenenfalls weitere fungizide Wirkstoffe, sowie Methoden zur Herstellung dieser Formulierungen und deren Verwendungen zum Schutz von thermoplastischen Polymeren gegen den Befall und die Zerstörung durch Mikroorganismen. Außerdem betrifft die Erfindung schimmelfeste PVC-Massen, die mit den erfinderischen Zusammensetzungen ausgerüstet wurden.

Seit Einführung der ersten künstlichen Polymere im 19. Jahrhundert spielt auch der Befall und der Abbau von Polymeren durch Mikroorganismen, wie z.B. Pilzen eine große Rolle. Die Neigung, von Mikroorganismen angegriffen und ggf. zersetzt zu werden, hängt stark von der Struktur der Polymere und den verwendeten Zuschlagsstoffen ab. Flexibles Polyvinylchlorid, welches z.B. für Folien für Schwimmbecken, Teiche und Sammelbecken, Textilien, Duschvorhänge, Bodenabdichtungen, -beläge und -abdeckungen, Sitzbezüge, flexible Dichtungen für Kühlschränke und Waschmaschinen, Abdichtungen für den Dachbau etc. verwendet wird, ist wegen seines hohen Anteils an Weichmachern und anderen Additiven besonders empfindlich gegenüber dem Befall durch Mikroorganismen. Zum Schutz gegenüber Mikroorganismen wird Weich-PVC deshalb mit antimikrobiellen Mitteln ausgestattet. Zur Zeit wird immer noch ein großer Teil mit dem toxikologisch sehr bedenklichen 10'-Oxybisphenoxyarsine (OBPA) ausgerüstet. Als Alternativen werden zunehmend 2-n-Octyl-4-isothiazolin-3-one (OIT) oder 4,5-Dichlor-2-n-octyl-4-isothiazolin-3-one (DCOIT) eingesetzt, die aber beide aufgrund ihrer stark sensibilisierenden Eigenschaften ebenfalls mit Problemen behaftet sind. (W. Paulus, Directory of microbicides for the protection of materials; Springer 2005, p.325 - 345; ISBN 1-4020-2817-2).

Die günstigen toxikologischen Eigenschaften machen Thiabendazol zu einem idealen Fungizid für die Ausrüstung von Kunststoffen, wie z.B. PVC.

Es ist bereits in einer Vielzahl an Patentanmeldungen und Veröffentlichungen der Einsatz von Thiabendazol, sowie Zusammensetzungen von Thiabendazol mit anderen Fungiziden zur antifungischen Ausrüstung von Weich-PVC beschrieben.

JP 08059937 beschreibt antibakteriell und antifungisch ausgerüstete PVC-Filme, die z.B. Thiabendazol als fungiziden Wirkstoff enthalten.

JP 02225548 beansprucht Thiazolylderivate, wie auch Thiabendazol zur Schimmelausrüstung von Vinyl Chlorid Polymeren.

In Borgmann-Strahsen, R.; Bessems,E. Kunststoffe 84 (1994) 158 - 162 werden Zusammensetzungen aus Thiabendazol und n-Octylisothiazolinon beschrieben, die einen guten Schutz von PVC gegenüber Schimmelbefall gewährleistet.

In der WO 2008075014 werden antifungische Formulierungen beschrieben, die einen Weichmacher enthalten, und hieraus hergestellte oder beschichtete Artikel. Bei den Fungiziden handelt es sich um Fludioxonil und/oder Difenoconazole, wobei auch Thiabendazol als optionaler Mischpartner genannt ist.

DE 10146189 beansprucht schimmelfreie PVC-Zusammensetzungen für Kühlschranktürdichtungen, die als fungizide Komponente Carbendazim, Thiabendazol, Tebuconazole oder Zinkpyrithion enthalten.

Als weiterer Zusatz bieten sich iodhaltige Fungizide zur Ergänzung des Wirkspektrums des Thiabendazols an.

Pulvermischungen aus Thiabendazol und iodhaltigen Fungiziden, insbesondere in Kombination mit Iodpropargylbutylcarbamat werden bereits als fungizide Mischungen für Kunststoffe angeboten, sind aber aus toxikologischen und sicherheitstechnischen Gründen bei der Handhabung nachteilig.

Gemische aus Thiabendazol und Weichmachern stellen häufig Suspensionen oder Dispersionen dar, da Thiabendazol in den gebräuchlichen Weichmachern nicht bzw. nur schlecht löslich ist. In diesen Suspensionen neigt Thiabendazol zur Agglomeration und Sedimentation. Daher können entsprechende Zusammensetzungen nicht mehr ohne weitere technischen Aufwand gleichmäßig in ein Polymer eingearbeitet werden.

Des Weiteren neigen Mischungen aus Thiabendazol und iodhaltigen Fungiziden in Weichmachern zu Zersetzungen, da insbesondere Dispersionen oder Suspensionen aus Thiabendazol und iodhaltigen Fungiziden, besonders bei höheren Temperaturen, nicht stabil sind. Die iodhaltigen Fungizide werden dann bereits nach kurzer Zeit chemisch abgebaut.

Aus dem Stand der Technik sind Methoden bekannt, den Abbau von Iodpropargylverbindungen in übergangsmetallhaltigen, Lösungsmittel-basierten, Alkyd-Harz enthaltenden Farben zu verhindern und so zu stabilisieren. Hierbei ist das Vorhandensein von Übergangsmetalen ursächlich für die Zersetzung der Iodpropargylverbindungen. So ist beispielsweise der Zusatz von Chelatisierungsreagenzien (WO 98/22543 A), organischen Epoxiden (WO 00/16628 A, 2-(2-Hydroxyphenyl)-benzotriazolen (WO 2007/028527 A) oder Azolverbindungen (WO 2007/101549 A) bekannt.

Des Weiteren sind Methoden bekannt, durch Epoxide (US 4,276,211, US 4,297,258), gegebenenfalls in Verbindung mit UV-Absorbern (WO 99/29176 A) oder Benzyliden-Campfer-Derivaten (US 6,472,424), Tetraalkylpiperidinverbindungen und/oder UV-Absorbern (EP 0 083 308 A) die lichtinduzierte Verfärbung von Iodprogargylverbindungen in wasserbasierten Anstrichfarben zu reduzieren.

Die Zersetzung der iodhaltigen Fungizide in Gegenwart von Thiabendazol in Dispersionen ist zu unterscheiden von der durch Übergangsmetalle oder Licht induzierten Zersetzung. In Gegenwart von Thiabendazol ist der Wirkstoff Thiabendazol ursächlich für die Zersetzung der iodhaltigen Fungizide verantwortlich.

Eine Aufgabe der vorliegenden Erfindung bestand somit darin, eine sedimentations- und lagerstabile Formulierung von Thiabendazol und iodhaltigen Fungiziden in Weichmachern herzustellen.

Diese Aufgabe wird vorteilhafterweise durch eine Zusammensetzung aus Thiabendazol, dessen Salze oder Säureadditionsverbindungen, mindestens ein iodhaltiges Fungizid und mindestens ein Epoxid gelöst.

Gegenstand der Erfindung sind daher Zusammensetzungen enthaltend Thiabendazol dessen Salze oder Säureadditionsverbindungen, mindestens ein iodhaltiges Fungizid und mindestens ein Epoxid.

Zusammensetzungen im Sinne der Erfindung stellen Gemische dar, die in verschiedenen Zustandsformen vorliegen können. Die erfindungsgemäßen Zusammensetzungen stellen bevorzugt Dispersionen dar.

Bei den eingesetzten Epoxiden kann es sich im Allgemeinen um alle Verbindungen handeln, die eine oder mehrere Epoxidgruppen im Molekül enthalten und ansonsten mit Thiabendazol, den iodhaltigen Fungiziden und Hilfsstoffen kompatibel sind und einen Siedepunkt oberhalb der Verarbeitungstemperatur des PVC haben. Verbindungen, die eine oder mehrere Epoxidgruppen im Molekül enthalten, werden im weiteren als "Epoxide" bezeichnet. Die im Rahmen der Erfindung als Stabilisatoren einsetzbaren Epoxide haben im allgemeinen einen Siedepunkt größer 180 °C und bevorzugt einen Siedepunkt größer 200 °C.

Zu den bevorzugten einsetzbaren Epoxiden gehören die folgenden Verbindungen: 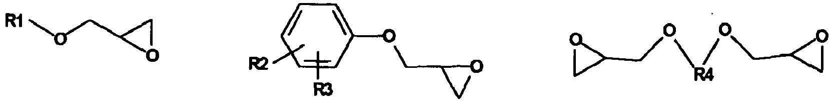 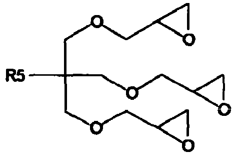 wobei
R¹ C₁-C₂₀-Alkyl
R² H, Alkyl, substituiertes Alkyl,
R³ Halogen,
R⁴ C₁-C₂₀-Alkyl und
R⁵ H, C₁-C₂₀-Alkyl, bevorzugt Methyl oder Ethyl
bedeuten, sowie bevorzugt Epoxide wie
1-Methyl-4-(1-methylethenyl)-7-oxabicyclo[4.1.0]heptane (CAS-RN 1195-92-2), 1-Methyl-4-(2-methyl-2-oxiranyl)-7-oxabicyclo[4.1.0]heptane (CAS-RN 96-08-2), 2,2'-[1,4-Cyclohexanediylbis(methyleneoxymethylene)]bis-oxirane (CAS-RN 14228-35-5), 2,2'-[(1-Methylethylidene)bis(4,1-phenyleneoxymethylene)]bis-oxirane (CAS-RN 1675-54-3), 3-(2-Oxiranyl)-7-oxabicyclo[4.1.0]heptane (CAS-RN 106-87-6), 7-Oxabicyclo[4.1.0]hept-3-ylmethyl7-oxabicyclo[4.1.0]heptane-3-carboxylic acid ester (CAS-RN 2386-87-0), 1,6-Bis(7-oxabicyclo[4.1.0]hept-3-ylmethyl)- hexanedioic acid ester (CAS-RN 3130-19-6), sowie weitere Epoxide, die hergestellt werden durch die Epoxidierung von Doppelbindungen in ungesättigten Festtsäuren, Fettsäureestern und Fettsäureglyceriden. Als epoxidierte Fettsäuren werden bevorzugt die Epoxide der einfach ungesättigte Fettsäuren wie (10*Z*)- Undeca- 10- ensäure, (9*Z*)- Tetradeca-9- ensäure, (9*Z*)- Hexadeca- 9- ensäure, (6*Z*)- Octadeca- 6- ensäure, (9*Z*)- Octadeca- 9- ensäure, (9*E*)- Octadeca- 9- ensäure, (11*E*)- Octadeca- 11- ensäure, (9*Z*)- Eicosa- 9- ensäure, (11*Z*)- Eicosa-11- ensäure, (11*Z*)- Docosa- 11- ensäure, (13*Z*)- Docosa- 13- ensäure oder (15*Z*)- Tetracosa- 15-ensäure, oder der zweifach ungesättigte Fettsäuren, wie insbesondere (9*Z*,12*Z*)- Octadeca- 9,12-diensäure, 9-cis-Octadecensäure oder 12-Hydroxy-9-cis-octadecensäure oder der dreifach ungesättigte Fettsäuren wie insbesondere (6*Z*,9*Z*,12*Z*)- Octadeca- 6,9,12- triensäure, (9*Z*,12*Z*,15*Z*)-Octadeca- 9,12,15- triensäure, (8*E*,10*E*,12*Z*)- Octadeca- 8,10,12- triensäure, (9*Z*,11*E*,13*Z*)-Octadeca- 9,11,13- triensäure, (9*Z*,1*E*,13*E*)- Octadeca- 9,11,13- triensäure, (9*E*,11*E*,13*E*)-Octadeca- 9,11,13- triensäure oder mehrfach ungesättigter Fettsäuren wie insbesondere (5*Z*,8*Z*,11*Z*,14*Z*)- Eicosa- 5,8,11,14- tetraensäure, (5*Z*,8*Z*,11*Z*,14*Z*,17*Z*)- Eicosa- 5,8,11,14,17-pentaensäure, (7*Z*,10*Z*,13*Z*,16*Z*,19*Z*)- Docosa- 7,10,13,16,19- pentaensäure, (4*Z*,7*Z*,10*Z*,13*Z*,16*Z*,19*Z*)- Docosa- 4,7,10,13,16,19- hexaensäure eingesetzt.

Besonders bevorzugt werden Trigylceride aus epoxidierten Fettsäuren eingesetzt, deren Fettsäuren eine Kohlenstofflänge von 17 bis 23 C-Atomen aufweisen und mindestens eine Epoxidgruppe enthalten.

Ganz besonders bevorzugt werden folgende Epoxide eingesetzt: Leinölepoxidate, Vernoniaölepoxidate, Sonnenblumenölepoxidate, Rhizunusölepoxidate und Sojaölepoxidate, insbesondere epoxidiertes Sojaöl (CAS-Nr. 8013-07-8).

Bei Thiabendazol handelt es sich um 2-(4-Thiazolyl)-1*H*-benzimidazol.

Als iodhaltige Fungizide sind beispielsweise N-(C1-C12)-Alkyl-iodtetrazole, N-(C6-C15)-Aryliodtetrazole, N-(C6-C15)-Arylalkyl-iodtetrazole Diiodmethyl-p-tolylsulfon, Diiodmethyl-p-chlorphenylsulfon, 3-Brom-2,3-diiod-2-propenylalkohol, 2,3,3-Triiodallylatkohol, 4-Chlor-2-(2-chlor-2-methylpropyl)-5-[(6-iod-3-pyridinyl)-methoxy]-3(2H)-pyridazinone (CAS-RN: 120955-77-3), Iodfenfos, 3-Iod-2-propinyl-2,4,5-trichlorphenylether, 3-Iod-2-propinyl-4-chlorphenylformal (IPCF), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal, 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinylphenyl-carbamat, Di-(3-Iod-2-propinyl)hexyl-dicarbamat, Düodmethyl-p-tolylsulfon, 3-Iod-2-propinyl,oxyethanol-ethylcarbamat, 3-Iod-2-propinyl-oxyethanol-phenyl-carbamat, 3-Iod-2-propinyl-thioxo-thioethylcarbamat, 3-Iod-2-propinyl-carbaminsäureester (IPC), 3-Brom-2,3-diiod-2-propenylethyl-carbamat, 3-Iod-2-propinyl-n-hexylcarbamat und 3-Iod-2-propinylcyclohexylcarbamat zu nennen.

Bevorzugt werden als iodhaltige Fungizide 3-Iod-2-propinyl-2,4,5-trichlorphenylether, 3-Iod-2-propinyl-4-chlorphenylformal (IPCF), N-Iodpropargyloxycarbonyl-alanin, N-Iodpropargyloxycarbonyl-alanin-ethylester, 3-(3-Iodpropargyl)-benzoxazol-2-on, 3-(3-Iodpropargyl)-6-chlorbenzoxazol-2-on, 3-Iod-2-propinyl-alkohol, 4-Chlorphenyl-3-iodpropargylformal, 3-Iod-2-propinyl-propyl-carbamat, 3-Iod-2-propinyl-butyl-carbamat (IPBC), 3-Iod-2-propinyl-m-chlorphenyl-carbamat, 3-Iod-2-propinyl-phenyl-carbamat, Di-(3-Iod-2-propinyl)hexyl-dicarbamat, Düodmethyl-p-tolylsulfon, 3-Iod-2-propinyloxyethanol-ethylcarbamat, 3-Iod-2-propinyloxyethanol-phenyl-carbamat, 3-Iod-2-propinyl-thioxo-thioethylcarbamat, 3-lod-2-propinylcarbaminsäureester (IPC), 3-Brom-2,3-diiod-2-propenylethylcarbamat, 3-Iod-2-propinyl-n-hexylcarbamat und 3-Iod-2-propinyl-cyclohexyl-carbamat eingesetzt.

Besonders bevorzugte iodhaltige Fungizide sind 3-Iod-2-propinyl-butyl-carbamat (IPBC) und Diiodmethyl-p-tolylsulfon.

Neben dem Thiabendazol und dem iodhaltigen Fungizid können die Zusammensetzungen gegebenenfalls auch noch ein oder weitere fungizide Wirkstoffe enthalten. Hierdurch kann die Schimmelfestigkeit im PVC nochmals erhöht werden. Häufig beobachtet man hier auch zusätzlich synergistische Effekte.

Im allgemeinen können alle Fungizide hierzu eingesetzt werden, die eine Wirkung gegenüber Schimmelpilzen haben. Auch hier können Zusammensetzungen eingesetzt werden um die Wirkung weiter zu verbessern.

Bevorzugt handelt es sich bei den Fungiziden um
Triazole wie:
   Azaconazol, Azocyclotin, Bitertanol, Bromuconazol, Cyproconazol, Diclobutrazol, Difenoconazol, Diniconazol, Epoxyconazol, Etaconazol, Fenbuconazol, Fenchlorazol, Fenethanil, Fluquinconazol, Flusilazol, Flutriafol, Furconazol, Hexaconazol, Imibenconazol, Ipconazol, Isozofos, Myclobutanil, Metconazol, Paclobutrazol, Penconazol, Propioconazol, Prothioconazol, Simeoconazol, (±)-cis-1-(4-chlorphenyl)-2-(1H-1,2,4-triazol-1-yl)-cycloheptanol, 2-(1-tert-Butyl)-1-(2-chlorphenyl)-3-(1,2,4-triazol-1-yl)-propan-2-ol, Tebuconazol, Tetraconazol, Triadimefon, Triadimenol, Triapenthenol, Triflumizol, Triticonazol, Uniconazol sowie deren Metallsalze und Säureaddukte;
Imidazole wie:
   Clotrimazol, Bifonazol, Climbazol, Econazol, Fenapamil, Imazalil, Isoconazol, Ketoconazol, Lombazol, Miconazol, Pefurazoat, Prochloraz, Triflumizol, Thiazolcar 1-Imidazolyl-1-( 4'-chlorophenoxy)-3,3-dimethylbutan-2-on sowie deren Metallsalze und Säureaddukte;
Pyridine und Pyrimidine wie:
   Ancymidol, Buthiobat, Fenarimol, Mepanipyrin, Nuarimol, Pyroxyfur, Triamirol;
Succinat-Dehydrogenase Inhibitoren wie:
   Benodanil, Carboxim, Carboximsulfoxid, Cyclafluramid, Fenfuram, Flutanil, Furcarbanil, Furmecyclox, Mebenil, Mepronil, Methfuroxam, Metsulfovax, Nicobifen, Pyrocarbolid, Oxycarboxin, Shirlan, Seedvax;
Naphthaiin-Derivate wie:
   Terbinafm, Naftifin, Butenafin, 3-Chloro-7-(2-aza-2,7,7-trimethyl-oct-3-en-5-in);
Sulfenamide wie:
   Dichlorfluanid, Tolylfluanid, Folpet, Fluorfolpet; Captan, Captofol;
Benzimidazole wie:
   Carbendazim, Benomyl, Fuberidazole oder deren Salze;
Morpholinderivate wie:
   Aldimorph, Dimethomorph, Dodemorph, Falimorph, Fenpropidin, Fenpropimorph, Tridemorph, Trimorphamid und ihre arylsulfonsauren Salze, wie z.B. p-Toluolsulfonsäure und p-Dodecylphenylsulfonsäure;
Benzthiazole wie:
   2-Mercaptobenzothiazol;
Benzthiophendioxide wie:
   Benzo[b]thiophen-S,S-dioxid-carbonsäurecyclohexylamid;
Benzamide wie:
   2,6-Dichloro-N-(4-trifluoromethylbenzyl)-benzamid, Tecloftalam;
Borverbindungen wie:
   Borsäure, Borsäureester, Borax;
Isothiazolinone wie:
   N-Methylisothiazolin-3-on, 5-Chlor-N-methylisothiazolin-3-on, 4,5-Dichloro-N-octylisothiazolin-3-on, 5-Chlor-N-octylisothiazolinon, N-Octyl-isothiazolin-3-on, 4,5-Trimethylen-isothiazolinon, 4,5-Benzisothiazolinon;
Thiocyanate wie:
   Thiocyanatomethylthiobenzothiazol, Methylenbisthiocyanat;
quartäre Ammoniumverbindungen und Guanidine wie:
   Benzalkoniumchlorid, Benzyldimethyltetradecylammoniumchlorid, Benzyldimethyldodecylammoniumchlorid, Dichlorbenzyldimethylalkylammoniumchlorid, Didecyldimethylammoniumchlorid, Dioctyldimethylammoniumchlorid, N-Hexadecyltrimethylammoniumchlorid, 1-Hexadecylpyridiniumchlorid, Iminoctadine-tris(albesilat);
lodderivate wie:
   Düodmethyl-p-tolylsulfon, 3-Iod-2-propinyl-alkohol, 4-Chlorphenyl-3-iodpropargylformal, 3-Brom-2,3-diiod-2-propenylethylcarbamat, 2,3,3-Triiodallylalkohol, 3-Brom-2,3-diiod-2-propenylalkohol, 3-Iod-2-propinyl-n-butylcarbamat, 3-Iod-2-propinyl-n-hexylcarbamat, 3-Iod-2-propinylcyclohexylcarbamat, 3-Iod-2-propinyl-phenylcarbamat;
Phenole wie:
   Tribromphenol, Tetrachlorphenol, 3-Methyl-4-chlorphenol, 3,5-Dimethyl-4-chlorphenol, Dichlorphen, 2-Benzyl-4-chlorphenol, Triclosan, Diclosan, Hexachlorophen, p-Hydroxybenzoesäuremethylester, p-Hydroxybenzoesäureethylester, p-Hydroxybenzoesäurepropylester, p-Hydroxybenzoesäurebutylester, p-Hydroxybenzoesäureoctylester, 4-(2-tert.-Butyl-4-methylphenoxy)-phenol, 4-(2-Isopropyl-4-methyl-phenoxy)-phenol, 4-(2,4-Dimethyl-phenoxy)-phenol und deren Alkali- und Erdalkalimetallsalze;
Pyridine wie:
   1-Hydroxy-2-pyridinthion (und ihre Cu-, Na-, Fe-, Mn-, Zn-Salze), Tetrachlor-4-methylsulfonylpyridin, Pyrimethanol, Mepanipyrim, Dipyrithion, 1-Hydroxy-4-methyl-6-(2,4,4-trimethylpentyl)-2(1H)-pyridin;
Methoxyacrylate oder Ähnliche wie:
   Azoxystrobin, Dimoxystrobin, Fluoxastrobin, Kresoxim-methyl, Metominostrobin, Orysastrobin, Picoxystrobin, Pyraclostrobin, Trifloxystrobin, 2,4-dihydro-5-methoxy-2-methyl-4-[2-[[[[1-[3-(trifluoromethyl)phenyl]ethylidene]amino]oxy]methyl]phenyl]-3H-1,2,4-triazol-3-one (CAS-Nr. 185336-79-2);
Oxide wie:
   Oxide der Metalle Zinn, Kupfer und Zink wie z.B. Tributylzinnoxid, Cu₂O, CuO, ZnO;
Dithiocarbamate wie:
   Cufraneb, Ferban, Kalium-N-hydroxymethyl-N'-methyl-dithiobarbamat, Na- oder K-dimethyldithiocarbamat, Macozeb, Maneb, Metam, Metiram, Thiram, Zineb, Ziram;
Nitrile wie:
   2,4,5,6-Tetrachlorisophthalodinitril, Dinatrium-cyano-dithioimidocarbamat;
Chinoline wie:
   8-Hydroxychinolin und deren Cu-Salze;

Ag, Zn oder Cu-haltige Zeolithe allein oder eingeschlossen in polymere Werkstoffe.

Ganz besonders bevorzugt handelt es sich bei den Fungiziden um Azaconazol, Bromuconazol, Cyproconazol, Dichlobutrazol, Diniconazol, Difenconazol, Hexaconazol, Metaconazol, Penconazol, Propiconazol, Tebuconazol, Azoxystrobin, Fludioxonil, Dichlofluanid, Tolylfluanid, Fluorfolpet, Methfuroxam, Carboxin, Fenpiclonil, Butenafin, Imazalil, N-Octylisothiazolin-3-on, Dichlor-N-octylisothiazolinon, Mercaptobenzthiazol, Thiocyanatomethyl-thiobenzothiazol, N-Butyl-benzisothiazolinon, 1-Hydroxy-2-pyridinthion (und ihre Cu-, Na-, Fe-, Mn-, Zn-Salze), Tetrachlor-4-methylsulfonylpyridin, 3-Iodo-2-propinyl-n-butylcarbamat, Diiodmethyl-p-tolylsulfon, Bethoxazin, 2,4,5,6-Tetrachlorisophthalodinitril und Carbendazim.

Optional kann man zusätzlich auch Algizide zusetzen um das Algenwachstum auf den PVC Flächen zu verhindern oder Mittel, die durch ihren unangenehmen oder bitteren Geschmack z.B. den Verbiss von Mardern an flexiblen Autoteilen / Dichtungen / Isolierungen verhindern.

Die einsetzbaren Epoxide der ungesättigten Fettsäuren, Fettsäureester und Fettsäureglyceride können gleichzeitig auch als Weichmacher verwendet werden. Die epoxidierten Fettsäureester oder epoxidierten Fettsäureglyceride können nach dem Fachmann bekannten Verfahren, wie z.B. durch Veresterung der epoxidierten Fettsäuren mit ein-, zwei-, oder dreiwertigen Alkoholen, wie insbesondere Glycerin, hergestellt werden.

Als Epoxide werden besonders bevorzugt epoxidierten Fettsäureglyceride, epoxidierten Fettsäureester oder epoxidierte Fettsäuren eingesetzt, deren Fettsäuren eine Kohlenstofflänge von 17 bis 23 C-Atomen aufweisen und die mindestens eine Epoxidgruppe enthalten. Diese Epoxide dienen dann auch bevorzugt als Weichmacher.

Ganz besonders bevorzugt handelt es sich bei den Epoxiden um Leinölepoxidate, Vernoniaölepoxidate, Sonnenblumenölepoxidate und Sojaölepoxidate.

Die Epoxide und die iodhaltigen Fungizide werden in einem Verhältnis von 10:1 bis 1:10 eingesetzt, bevorzugt werden die Epoxide in einem Verhältnis von 5:1 zu 1:5 eingesetzt, besonders bevorzugt werden die Epoxide und die iodhaltigen Fungizide in einem Verhältnis von 2:1 bis 1:2 eingesetzt. Als Weichmacher werden bevorzugt Phthalate wie insbesondere Diethylhexylphthalat (DEHP), Dibutylphthalat (BBP), Diisononylphthalat (DINP), Diisodecylphthalat (DIDP), Diisooctylphthalat (DNOP), Diisobutylphthalat (DIBP), Diisohexylphthalat, Diisoheptylphthalat, Di-n-octylphthalat, Diisoundecylphthalat, Diisotredecylphthalate; um Adipate, wie insbesondere Diethylhexyladipat (DEHA), Diisooctyladipat, Diisononyladipat, Polyester der Adipinsäure oder Glutarsäure wie insbesondere Ultramoll® IV der Lanxess Deutschland GmbH; Trialkylester der Zitronensäure oder acetylierte Trialkylester der Zitronensäure, wie insbesondere Acetyltributylcitrat (ATBC); Ester der Trimellitsäure, wie insbesondere Tri(2-ethylhexyl)trimellitat, Tri(isooctyl)trimellitat, Trüsononyl)trimellitat; 1,2-Dicyclohexylbasierte Weichmacher wie insbesondere 1,2-Cyclo-hexandicarbonsäurenonylester (Hexamoll®, DINCH); Alkylsulfonsäureester des Phenols, wie insbesondere Mesamoll® der Lanxess Deutschland GmbH (CAS-Nr 091082-17-6); Acetylierte Mono- und Diglyceride; Benzoesäurediester, insbesondere von Dialkylenglycolen, wie insbesondere Dipropylenglycoldibenzoat, oder Isononylbenzoat; Trimethylolpropanester wie insbesondere Trimethylolpropan-benzoat-2-ethylhexanoat-Gemische; Dialkylester der Terephthalsäure, wie insbesondere Di-2-ethylhexylterephthalat.

Bevorzugt werden aber keine weiteren Weichmacher eingesetzt, sondern epoxidierten Fettsäureglyceride, epoxidierten Fettsäureester oder epoxidierte Fettsäuren eingesetzt, die als Epoxide die Zusammensetzung aus TBZ und IPBC stabilisieren und zudem die Funktion des Weichmachers übernehmen.

Die Weichmacher können hierbei entweder als Einzelkomponente eingesetzt werden oder aber auch aus Zusammensetzungen mehrerer Weichmacher bestehen.

Zudem können weitere Hilfmittel wie z.B. Thixotropiermitteln und Stabilisatoren der Mischung zugesetzt werden Als Thixotropiermittel kann es sich im allgemeinen um alle Stoffe handeln, die in der Lage sind, Dispersionen von Thiabendazol und ggf. anderen Fungiziden in Weichmachern zu stabilisieren und somit vor einer Sedimentation der Wirkstoffe zu bewahren.

Bevorzugt handelt es sich bei den Thixotropiermitteln, um anorganische Thixotropiermittel wie modifizierte Schichtsilikate, pyrogene Kieselsäuren oder Fällungskieselsäuren oder um organische Thixotropiermittel, wie Rizinusölderivate oder um Mono- Di- oder Triglyceride aus Rizinolsäurederivaten, insbesondere Mono- Di- oder Triglyceride aus (12R)-cis-12-Hydroxyoctadec-9-ensäure, (9Z,12R)-12-Hydroxyoctadec-9-ensäure oder 12-Hydroxyoctadecansäure, Ester oder Amide der Rizinolsäure oder deren Salze, modifizierte Polyamide oder Fettsäureamide, modifizierte Polyamidwachse, wie insbesondere Luvotix® HP der Fa. Lehmann & Voss, Hamburg, Germany, thixotropierend wirkende Polyolefine, wie insbesondere Luvotix® P25x der Fa. Lehmann & Voss, Hamburg, Germany, Harnstoffderivate oder speziell modifizierte Alkydharze oder Zusammensetzungen hieraus.

Besonders bevorzugt handelt es sich bei den Thixotropiermitteln um Rizinusölderivate, wie z.B. hydriertes Rizinusöl, sulfatiertes Rizinusöl (CAS 8002-33-3), mit Polyamiden oder Fettsäureamiden derivatisiertes Rizinusöl, insbesondere Luvotix® HT der Fa. Lehmann & Voss, Hamburg, Germany, anorganisch modifiziertes Rizinusöl, silikatmodifiziertes Rizinusöl, wie insbesondere Luvotix® ZR 50 der Fa. Lehmann & Voss, Hamburg, Germany, modifizierte Polyamide, wie Rilanit® plus der Fa. Cognis, modifizierte Polyamidwachse, wie insbesondere Luvotix® HP der Fa. Lehmann & Voss, Hamburg, Germany, thixotropierend wirkende Polyolefine wie insbesondere Luvotix® P25x oder Luvotix® P50 der Fa. Lehmann & Voss, Hamburg, Germany, Thixotropierend wirkende Alkydharze, die z.B. Harnstoffstrukturen aufweisen oder urethanisiert sind oder Triglyceride aus Rizinolsäurederivaten, insbesondere Triglyceride aus (12R)-cis-12-Hydroxyoctadec-9-ensäure, (9Z,12R)-12-Hydroxyoctadec-9-ensäure oder 12-Hydroxyoctadecansäure, Ester oder Amide der Rizinolsäure oder deren Salze. Die Triglyceride der Rizinolsäurederivate, der Rizinolsäure oder der hydrierten Rizinolsäure (12-Hydroxyoctadecansäure) deren Ester oder deren Amide sowie deren Salze können mit den Zusammensetzungen zum Schutz von thermoplastischen Polymeren eingesetzt werden, die gegebenenfalls weitere gesättigte, ungesättigte, verzweigte oder unverzweigte Fettsäuren enthalten. Bevorzugt werden die Triglyceride der Rizinolsäurederivate, der Rizinolsäure oder der hydrierten Rizinolsäure (12-Hydroxyoctadecansäure) deren Ester oder deren Amide sowie deren Salze mit den Zusammensetzungen zum Schutz von thermoplastischen Polymeren eingesetzt.

Ganz besonders bevorzugt wird als Rizinusölderivat hydriertes Rizinusöl (CAS-Nr. 8001-78-3), wie es beispielsweise im Luvotix® R der Fa. Lehmann & Voss, Hamburg, Germany, enthalten ist, eingesetzt.

Es können auch weitere Thixotropiermitteln oder Zusammensetzungen aus Thixotropiermitteln eingesetzt werden. Die einsetzbaren Thixotropiermittel sind im allgemeinen kommerziell erhältlich und werden normalerweise auch für lösungsmittelbasierte Farben gegen ein Absetzen der Pigmente eingesetzt. Um die Eigenschaften, wie Temperaturempfindlichkeit, UV-Stabilität, Oxidationsstabilität der Dispersionen selbst, der Dispersionen bei der Einarbeitung in das PVC und der daraus hergestellten PVC Zubereitungen noch weiter zu verbessern, können Stabilisatoren eingesetzt werden.

Bei den gegebenenfalls einsetzbaren Stabilisatoren kann es sich um Antioxidantien, Radikalfängern oder UV-Absorbern handeln. Gegebenenfalls können ein oder mehrere dieser Stoffe eingesetzt werden.

Beispielhaft seien als Stabilisatoren genannt:
sterisch gehinderten Phenole, wie
   2,6-Di-tert.-butyl-4-methylphenol, 2-tert.-butyl-4,6-dimethylphenol, 2,6-Di-cyclopentyl-4-methylphenol, 2-(a-Methylcyclohexyl)-4,6-dimethylphenol, 2,6-Di-octadecyl-4-methylphenol oder 2,6-Di-tert.-butyl-4-methoxymethylphenol, Diethyl-(3,5-di-tert-butyl-4-hydroxybenzyl)phosphonate, 2,4-Dimethyl-6-(1 -methylpentadecyl)-phenol, 2-Methyl-4,6-Bis[(octylthio)methyl]-phenol, 2,6-Di-tert.-butyl- 4-methoxyphenol, 2,5-Di-tert.-butyl-hydrochinon, 2,5-Di-tert.-amyl-hydrochinon, 2,6-Diphenyl-4-octadecyloxyphenol, 2,2'-Thio-bis-(6-tert.-butyl-4-methylphenol), 2,2'-Thio-bis-(4-octylphenol), 4,4'-Thio-bis-(6-tert.-butyl-3-methylphenol), 4,4'-Thio-bis-(6-tert.-butyl-2-methylphenol), 2,2'-Methylen-bis-(6-tert.-butyl-4-methylphenol), 2,2'-Methylenbis-(4-methyl-6-cyclohexylphenol), 2,2'-Methylen-bis-(4,6-di-tert.-butylphenol), 2,2'-Ethyliden-bis-(4,6-di-tert.-butylphenol), 4,4'-Methylen-bis-(2,6-di-tert.-butylphenol), 4,4'-ethylen-bis-(6-tert.-butyl- 2-methylphenol), 1,1-Bis-(5-tert.-butyl-4-hydroxy2-methylphenyl)-butan, 1,1,3-Tris-(5-tert.-butyl-4-hydroxy-2-methylphenyl)-butan, 1,3,5-Tri-(3,5-di-tert.-butyl-4-hydroxybenzyl)2,4,6-trimethylbenzol, 3,5-Di-tert.-butyl-4-hydroxy-benzyl- mercaptoessigsäure-isooctylester, 1,3,5-Tris-(3,5-di-tert.-butyl-4-hydroxybenzyl)- isocyanurat, 1,3,5-Tris-(4-tert.-butyl-3-hydroxy-2,6dimethylbenzyl)-isocyanurat, 1,3,5-Tris[(3,5-di-tert-butyl-4-hydroxyphenyl)-propionyloxyethyl]isocyanurate, 3,5-Di-tert.-butyl-4-hydroxybenzyl-phosphonsäure-dioctadecyl-ester, 3,5-Di-tert.butyl-4-hydroxybenzyl-phosphonsäure-monoethylester-Calcium-salz, N,N'-Di-(3,5-di-tert.-butyl-4-hydroxyphenylpropionyl)-hexamethylendiamin, N,N'-Di-(3,5-di-tert.-butyl-4-hydroxyphenylpropionyl)-trimethylendiamin, N,N'-Di-(3,5-di-tert-butyl-4-hydroxyphenyl-propionyl)-hydrazin, 3,9-Bis[1,1-dimethyl-2-[(3-tert-butyl-4-hydroxy-5-methylphenyl)propionyloxy]ethyl]-2,4,8,10-tetraoxaspiro[5.5]undecane, Bis-[3,3-bis(4'-hydroxy-3'-tert-butylphenyl)butanoic acid] ethylene glycol ester, 2,6-bis[[3-(1,1-dimethylethyl)-2-hydroxy-5-methylphenyl]octahydro-4,7-methano-1H-indenyl]-4-methyl-phenol (= Wingstay L), 2,4-Bis(n-octylthio)-6-(3,5-di-tert-butyl-4-hydroxyphenylamino)-s-triazine, N-(4-Hydroxyphenyl)octadecanamide, 2,4-Di-tert-butylphenyl 3',5'-di-tert-butyl-4'-hydroxybenzoate, (Benzoic acid, 3,5-bis(1,1-dimethylethyl)-4-hydroxy-, hexadecyl ester), 3-Hydroxyphenyl benzoate, 2,2'-Methylenebis(6-tert-butyl-4-methylphenol) monoacrylate, 2-(1,1-dimethylethyl)-6-[1-[3-(1,1-dimethylethyl)-5-(1,1-dimethylpropyl)-2-hydroxyphenyl]ethyl]-4-(1,1-dimethylpropyl)-phenyl ester,
   Ester der β-(3,5-Di-tert.-butyl-4-hydroxyphenyl)-propionsäure mit ein- oder mehrwertigen Alkoholen wie insbesondere mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäwediamid,
   Ester der β-(5-tert--Butyl-4-hydroxy-3-methylphenyl)-propionsäure mit ein- oder mehrwertigen Alkoholen, wie insbesondere mit Methanol, Octadecanol, 1,6-Hexandiol, Neopentylglycol, Thiodiethylenglycol, Diethylenglycol, Triethylenglycol, Pentaerythrit, Tris-hydroxyethylisocyanurat oder Di-hydroxyethyl-oxalsäurediamid.
Gehinderte Amine wie,
   Bis(1,2,2,6,6-pentamethyl-4-piperidyl) 2-(3,5-di-tert-butyl-4-hydroxybenzyl)-2-butyl malonate, Bis(2,2,6,6-tetramethyl-4-piperidyl) decanedioate, Dimethyl succinate-1-(2-hydroxyethyl)-4-hydroxy-2,2,6,6-tetramethylpiperidine copolymer, Poly[[6-[(1,1,3,3-tetramethylbutyl)amino]-1,3,5-triazine-2,4-diyl][(2,2,6,6-tetramethyl-4-piperidyl)imino]hexamethylene[(2,2,6,6-tetramethyl-4-piperidyl)imino]] (CAS-Nr 71878-19-8), 1,5,8,12-Tetrakis[4,6-bis(N-butyl-N-1,2,2,6,6-pentamethyl-4-piperidylamino)-1,3,5-triazin-2-yl]-1,5,8,12-tetraazadodecane (CAS-Nr. 106990-43-6), Bis(1,2,2,6,6-pentamethyl-4-piperidyl) decanedioate, Bis(1,2,2,6,6-pentamethyl-4-piperidyl) 2-(3,5-di-tert-butyl-4-hydroxybenzyl)-2-butyl malonate, Decanedioic acid, bis(2,2,6,6-tetramethyl-4-piperidinyl) ester. Reaktionsprodukte mit tert-Butylhydroperoxide und Octan (CAS-Nr 129757-67-1), Chimasorb 2020 (CAS-Nr 192268-64-7), Poly[[6-morpholino-1,3,5-triazine-2,4-diyl][(2,2,6,6-tetramethyl-4-piperidinyl)imino]-l,6-hexanediyl[(2,2,6,6-tetramethyl-4-piperidinyl)imino]], Poly[[6-(4-morpholinyl)-1,3,5-triazine-2,4-diyl] [(1,2,2,6,6-pentamethyl-4-piperidinyl)imino]-1,6-hexanediyl[(1,2,2,6,6-pentamethyl-4-piperidinyl)imino]] (9CI), 3-Dodecyl-1-(2,2,6,6-tetramethyl-4-piperidyl)pyrrolidine-2,5-dione, 3-Dodecyl-1-(1,2,2,6,6-pentamethylpiperidin-4-yl)pyrrolidine-2,5-dione"4-Octadecanoyloxy-2,2,6,6-tetramethylpiperidine, Poly[[6-(cyctohexylamino)-1,3,5-triazine-2,4-diyl][(2,2,6,6-tetramethyl-4-piperidinyl)imino]-1,6-hexanediyl[(2,2,6,6-tetramethyl-4-piperidinyl)imino]], 1H,4H,5H,8H-2,3a,4a,6,7a,8a-Hexaazacyclopenta[def]fluorene-4,8-dione, hexahydro-2,6-bis(2,2,6,6-tetramethyl-4-piperidinyl)- (CAS-Nr 109423-00-9), N,N'-Bis(formyl)-N,N'-bis(2,2,6,6-tetramethyl-4-piperidyl)-1,6-hexanediamine, N-(tetramethyl-4-piperidinyl)-maleimide-C20-24-α-olefin copolymer (CAS-Nr 199237-39-3), Tetrakis(1,2,2,6,6-pentamethyl-4-piperidyl) 1,2,3,4-butanetetracarboxylate, Tetrakis(2,2,6,6-tetramethyl-4-piperidyl) 1,2,3,4-butanetetracarboxylate, 1,2,2,6,6-Pentamethyl-4-piperidinyl tridecyl 1,2,3,4-butanetetracarboxylate, (1,2,3,4-Butanetetracarboxylic acid, 2,2,6,6-tetramethyl-4-piperidinyl tridecyl ester), (2,4,8,10-Tetraoxaspiro[5.5]undecane-3,9-diethanol, β,β,β',β'-tetramethyl-, polymer with 1,2,3,4-butanetetracarboxylic acid) (CAS-Nr 115055-30-6), 2,2,4,4-Tetramethyl-21-oxo-7-oxa-3,20-diazadispiro[5.1.11.2]heneicosane, (7-Oxa-3,20-diazadispiro[5.1.11.2]heneicosane-20-propanoic acid, 2,2,4,4-tetramethyl-21-oxo-, tetradecyl ester), (7-Oxa-3,20-diazadispiro[5.1.11.2]heneicosan-21-one, 2,2,4,4-tetramethyl-20-(oxiranylmethyl)-), (Propanamide, N-(2,2,6,6-tetramethyl-4-piperidinyl)-3-[(2,2,6,6-letramethyl-4-piperidinyl)amino]-), (1,3-Propanediamine, N,N"-1,2-ethanediylbis-, polymer with 2,4,6-trichloro-1,3,5-triazine, Reaktionsprodukte mit N-butyl-2,2,6,6-tetramethyl-4-piperidinamine) (CAS-Nr 136504-96-6), 1,1'-Ethylenebis(3,3,5,5-tetramethyl-2-piperazinone), (Piperazinone, 1,1',1"-[1,3,5-triazine-2,4,6-triyltris[(cyclohexylimino)-2,1-eihanediyl]]tris[3,3,5,5-tetramethyl-), (7-Oxa-3,20-diazadispiro[5.1.11.2]heneicosane-20-propanoic acid, 2,2,4,4-tetramethyl-21-oxo-, dodecyl ester), 1,1-Bis(1,2,2,6,6-pentamethyl-4-piperidyloxycarbonyl)-2-(4-methoxyphenyl)ethene, (2-Propenoic acid, 2-methyl-, methyl ester, polymer with 2,2,6,6-tetramethyl-4-piperidinyl 2-propenoate) (CAS-Nr 154636-12-1), (Propanamide, 2-methyl-N-(2,2,6,6-tetramethyl-4-piperidinyl)-2-[(2,2,6,6-tetramethyl-4-piperidinyl)amino]-), (D-Glucitol, 1,3:2,4-bis-O-(2,2,6,6-tetramethyl-4-piperidinylidene)-) (CAS-Nr 99473-08-2), N,N'-Bis(2,2,6,6-tetramethyl-4-piperidinyl)isophthalamide, 4-Hydroxy-2,2,6,6-tetramethylpiperidine, 1-Allyl-4-hydroxy-2,2,6,6-tetramethylpiperidine, 1-Benzyl-4-hydroxy-2,2,6,6-tetramethylpiperidine, 1-(4-tert.-Butyl-2-butenyl)-4-hydroxy-2,2,6,6-tetramethylpiperidine, 4-Stearoyloxy-2,2,6,6-tetramethylpiperidine, 1-Ethyl-4-salicyloyloxy-2,2,6,6-tetramethylpiperidine, 4-Methacryloyloxy-1,2,2,6,6-pentamethylpiperidine, 1,2,2,6,6Pentamethylpiperidin-4-yl-β-(3,5-ditert.-butyl-4-hydroxyphenyl)-propionate, 1-Benzyl-2,2,6,6tetramethyl-4-piperidinylmaleinate, (Di-2,2,6,6-tetramethylpiperidin-4-yl)-adipate, (Di-2,2,6,6-tetramethylpiperidin-4-yl)-sebacate, (Di-1,2,3,3,6-tetramethyl-2,6-diethyl-piperidin-4-yl)sebacate, (Di-1-allyl-2,2,6,6-tetramethyl-piperidin-4-yl)phthalate, 1-Propargyl-4-β-cyanoethyloxy-2,2,6,6-tetramethylpiperidine, 1-Acetyl-2,2,6,6-tetramethylpiperidin-4-yl-acetate, (Trimellitic acid-tri-(2,2,6,6-tetramethylpiperidin-4-yl)ester), 1-Acryloyl-4-benzyloxy-2,2,6,6-tetramethylpiperidine, Dibutylmalonic acid-di- (1,2,2,6,6-pentamethyl-piperidin-4-yl)ester, Butyl-(3,5-di-tert-butyl-4-hydroxybenzyl)-malonic acid-di-(1,2,2,6,6-pentamethylpiperidin-4-yl)ester, Dibenzyl- malonic acid-di-(1,2,2,6,6-pentamethylpiperidin-4-yl)ester, Dibenzyl-malonic acid-di-(1,2,3,6-tetramethyl-2,6-diethyl-piperidin-4-yl)ester, Hexane-1',6'-bis- (4-carbamoyloxy-1-n-butyl-2,2,6,6-tetramethylpiperidine), Toluene-2',4'-bis- (4-carbamoyloxy-1-n-propyl-2,2,6,6-tetramethylpiperidine), Dimethyl-bis-(2,2,6,6-tetramethylpiperidine-4-oxy)silane, Phenyl-tris-(2,2,6,6-tetramethylpiperidine-4-oxy)silane, Tris-(1-propyl-2,2,6,6-tetramethylpiperidin-4-yl)phosphite, Tris-(1-propyl-2,2,6,6-tetramethylpiperidin-4-yl)phosphate, Phenyl-[bis-(1,2,2,6,6-pentamethylpiperidin-4-yl)-phosphonate, Di(1,2,2,6,6-pentamethylpiperidin- 4-yl)sebacate, NN'-Bis-(2,2,6,6-tetramethylpiperidin-4-yl)hexamethylene- 1,6-diamine, NN'-Bis-(2,2,6,6-tetramethylpiperidin-4-yl)-hexamethylene- 1,6-diacetamide, 1-Acetyl-4-(N-cyclohexylacetamido)-2,2,6,6-tetramethylpiperidine, 4-Benzylamino-2,2,6,6-tetramethylpiperidine, N,N'-Bis-(2,2,6,6-tetramethylpiperidin-4-yl)-N,N'-dibutyladipamide, N,N'-Bis-(2,2,6,6-tetramethylpiperidin-4-yl)-N,N'-dicyclohexyl-(2-hydroxypropylene), NN'-Bis-(2,2,6,6-tetramethylpiperidin-4-yl)-p-xylylenediamine, 4-(Bis-2-hydroxyethyl)-amino-1,2,2,6,6-pentamethylpiperidine, 4-(3-Methyl-4-hydroxy-5-tert.-butyl-benzoicacidamido)-2,2,6,6-tetramethylpiperidine, 4-Methacrylamino-1,2,2,6,6-pentamethylpiperidine, 9-Aza-8,8,10,10-tetramethyl-1,5-dioxaspiro[5.5]undecane, 9-Aza-8,8,10,10-tetramethyl-3-ethyl- 1,5-dioxaspiro[5.51undecane, 8-Aza-2,7,7,8,9,9-hexamethyl-1,4-dioxaspiro[4.5]decane, 9-Aza-3-hydroxymethyl-3-ethyl-8,8,9,10,10-pentamethyl-1-5-dioxaspiro[5.5]-undecane, 9-Aza-3-ethyl-3-acetoxymethyl- 9-acetyl-8,8,10,10-tetramethyl- 1,5-dioxaspiro-[5.5]undecane, 2,2,6,6-Tetramethylpiperidine-4-spiro-2'-(1',3'-dioxane)5'-spiro-5"-(1",3"-dioxane)-2"-spiro4"-(2"',2"',6"',6"'-tetramethylpiperidine), 3-Benzyl-1,3,8-triaza-7,7,9,9-tetramethyl-spiro-[4.5]decane-2,4-dione, 3-n-Octyl-1,3,8-triaza-7,7,9,9-tetramethyl-spiro[4.5]decane-2,4-dione, 3-Allyl-1,3,8-triaza-1,7,7,9,9-pentamethyl-spiro[4.5]decane-2,4.dione, 3-Glycidyl-1,3,8-triaza-7,7,8,9,9-pentamethyl-spiro[4.5]decane-2,4-dione, 2-Isopropyl-7,7,9,9-tetramethyl-1-oxa-3,8-diaza-4-oxyspiro[4.5]decane, 2-Butyl-7,7,9,9-tetramethyl-1-oxa-3,8-diaza-4-oxyspiro[4.5]decane, 2-Isopropyl-7,7,9,9-tetramethyl-1-oxa-4,8-diaza-oxyspiro[4.5]decane, 2-Butyl-7,7,9,9-tetramethyl-1-oxa-4,8-diaza-3-oxyspiro[4.5]decane, Bis-[β-(2,2,6,6-tetramethylpiperidino)-ethyl]-sebacate, α-(2,2,6,6-tetramethylpiperidino)-acetic acid-n-octyl-ester, 1,4-bis-(2,2,6,6-tetramethylpiperidino)-2-butene, N-Hydroxymethyl-N'-2,2,6,6-tetramethylpiperidin-4-yl-urea, N-Methoxymethyl-N'-2,2,6,6-tetramethylpiperidin-4-yl-urea, N-Methoxymethyl-N'-n-dodecyl- N'-2,2,6,6-tetramethylpiperidin-4-yl-urea, O-(2,2,6,6-Tetramethylpiperidin-4-yl)- N-methoxymethyl-urethane.
Phosphite und Phosphonate wie,
   Tri(nonylphenyl) phosphite, Tris(2,4-di-tert-butylphenyl) phosphite, Bis(2,4-di-tert-butylphenyl) pentaerythritol diphosphite, Bis(2,6-di-tert-butyl-4-methylphenyl)pentaerythritol diphosphite, 2,2'-Methylenebis(4,6-di-tert-butylphenyl) octyl phosphite, Tetrakis(2,4-di-tert-butylphenyl)[1,1'-biphenyl]-4,4'-diylbisphosphonite, 2,2'-Ethylidenebis(4,6-di-tert-butylphenyl) fluorophosphite, Dioctadecyl pentaerythritol diphosphonite, 2-[[2,4,8,10-Tetrakis(1,1-dimethylethyl)dibenzo[d,f]-[1,3,2]dioxaphosphepin-6-yl]oxy]-N,N-bis[2-[[2,4,8,10-tetrakis(1,1-dimethylethyl)dibenzo-[d,f][1,3,2]dioxaphosphepin-6-yl]oxy]ethyl]ethanamine (CAS-Nr. 80410-33-9), Bis(2,4-di-tert-butyl-6-methylphenyl) ethyl phosphite, 2,4,6-Tri-tert-butylphenyl- 2-butyl-2-ethyl-l,3-propanediol phosphite, Bis(2,4-dicumylphenyl) pentaerythritol diphosphite,
Hydroxylamine wie,
   Amines, bis(hydrogenated tallow alkyl), oxidized,
Sekundäre Arylamine wie,
   N-(2-Naphthyl)-N-phenylamine, 2,2,4-Trimethyl-1,2-dihydroquinoline polymer (CAS-Nr: 26780-96-1), N-2-Propyl-N'-phenyl-p-phenylenediamine, N-(1-Naphthyl)-N-phenylamine, (Benzenamine, N-phenyl-, Reaktionsprodukte mit 2,4,4-trimethylpentene) (CAS-Nr. 68411-46-1), 4-(1-Methyl-1-phenylethyl)-N-[4-(1-methyl-1-phenylethyl)phenyl]aniline.
Lactone und Benzofuranone wie,
   Irganox HP 136 (CAS Nr. 181314-48-7)
Thioether und Thioester wie,
   Distearyl-3,3-thiodipropionate, Dilauryl 3,3'-thiodipropionate, Ditetradecylthiodipropionate, Di-n-octadecyl disulfide.
UV-Absorber wie,
   (Methanone, [methylenebis(hydroxymethoxyphenylene)]bis[phenyl-), (Methanone, [1,6-hexanediytbis[oxy(2-hydroxy-4, -phenylene)]]bis[phenyl-), 2-Benzoyl-5-methoxyphenol, 2,4-Dihydroxybenzophenone, 2,2'-Dihydroxy-4-methoxybenzophenone, 2-Hydroxy-4-octyloxybenzophenone, 2-Hydroxy-4-dodecyloxybenzophenone, 2-(2-Hydroxy-4-hexyloxyphenyl)-4,6-diphenyl-1,3,5-triazine, 2,4-Bis(2,4-dimethylphenyl)-6-(2-hydroxy-4-octyloxyphenyl)-1,3,5-triazine, 2-Ethoxy-2'-ethyloxalic acid bisanilide, N-(5-tert-Butyl-2-ethoxyphenyl)-N'-(2-ethylphenyl)oxamide, Dimethyl (p-methoxybenzylidene)malonate, 2,2'-(1,4-Phenylene)bis[3,1-benzoxazin-4-one], N'-(4-Ethoxycarbonylphenyl)-N-methyl-N-phenylformamidine, 4-Methoxycinnamic acid 2-ethylhexyl ester, 4-Methoxycinnamic acid isoamyl-ester, 2-Phenylbenzimidazole-5-sulfonsäure, 2-Cyano-3,3-diphenylacrylic acid 2-ethylhexyl ester, 2-Ethylhexyl salicylate, 3-(4-Methylbenzylidene)bornan-2-one.

Durch die Verwendung der erfindungsgemäßen Zusammensetzungen ist das PVC geschützt vor dem Befall durch Schimmelpilze.

Es seien beispielsweise Schimmelpilze der folgenden Gattung genannt, :
Alternaria, wie Alternaria tenuis,
Aspergillus, wie Aspergillus niger,
Chaetomium, wie Chaetomium globosum,
Coniophora, wie Coniophora puetana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viridae

Die erfindungsgemäßen Zusammensetzungen eignen sich zur Ausrüstung thermoplastischer Kunststoffe.

Bei dem auszurüstenden Material handelt es sich bevorzugt um polymere halogenhaltige Vinylverbindungen, wie z.B. Polyvinylchlorid (PVC) und Polyvinylidenchlorid oder Copolymere aus Vinylchlorid / Vinylidenchlorid, Vinylchlorid / Vinylacetat, Vinylidenchlorid / Vinylacetat.

Die Zusammensetzungen der polymeren halogenhaltigen Vinylverbindungen können auch weitere Kunststoffe enthalten, die beispielsweise als polymere Verarbeitungshilfsmittel oder Schlagzähverbesserer wirken. Diese weiteren Kunststoffe werden ausgewählt aus der Gruppe bestehend aus den Homo- und Copolymeren auf Basis von Ethylen, Propylen, Butadien, Vinylacetat, Glycidylacrylat, Glycidylmethacrylat, Acrylaten und Methacrylaten mit Alkoholkomponenten von verzweigten oder unverzweigten C₁- bis C₁₀-Alkoholen, Styrol oder Acrylnitril. Zu nennen sind insbesondere Polyacrylate mit gleichen oder verschiedenen Alkoholresten aus der Gruppe der C₄-bis C₈-Alkohole, besonders des Butanols, Hexanols, Octanols und 2-Ethylhexanols, Polymethylmethacrylat, Methyl-methacrylat-Butylacrylat-Copolymere, Methylmethacrylat-Butylmethacrylat-Copolymere, Ethylen-Vinylacetat-Copolymere, chloriertes Polyethylen, Nitrilkautschuk, Acrylnitril-Butadien-Styrol-Copolymere, Ethylen-Propylen-Copolymere, Ethylen-Propylen-Dien-Copolymere, Styrol-Acrylnitril-Copolymere, Acrylnitril-Butadien-Rubber, Styrol-Butadien-Elastomere und Methylmethacrylat-Styrol-Butadien-Copolymere.

Die erfindungsgemäßen Zusammensetzungen eignen sich aber auch zur Ausrüstung anderer thermoplastischer Kunststoffe, wie z.B. Polyethen (PE), Polypropen (PP), Polystyrol (PS), Polyacrylnitril (PAN), Polyamide (PA), Polyester (PES), Polyacrylate oder Zusammensetzungen hieraus.

Die erfindungsgemäßen Zusammensetzungen können nach bekannten Methoden in das PVC eingearbeitet werden, z.B. durch Extrusion oder Kalendrierung. Hierbei können die Zusammensetzungen entweder mit den Hilfsstoffen (Thixotropiermitteln, Weichmacher, Stabilisatoren, Farben und Pigmente, Füllstoffe etc.) der PVC-Herstellung gemischt und dann eingearbeitet werden. Es ist aber auch möglich die Zusammensetzungen in das bereits fertige PVC einzuarbeiten. Die Methoden hierzu sind Stand der Technik und werden industriell breit eingesetzt.

Die Erfindung umfasst ebenfalls ein Verfahren zur Herstellung von polymeren Produkten aus thermoplastischem Polymeren, insbesondere aus Polyvinylchlorid, mindestens einem Epoxid, Thiabendazol und mindestens einem iodhaltigen Fungizid, bei dem durch Extrusion, Kalendrierung oder Kompoundierung die erfindungsgemäße Zusammensetzung aus mindestens einem Epoxid, Thiabendazol und mindestens einem iodhaltigen Fungizid in das thermoplastische Polymer, insbesondere in Polyvinylchlorid, eingearbeitet wird.

Von der Erfindung ist ebenfalls ein Verfahren zur Herstellung der erfindungsgemäßen Zusammensetzungen umfasst, bei dem mindestens ein Epoxid, Thiabendazol und mindestens ein iodhaltiges Fungizid, vermischt wird. Der Mischungsvorgang kann durch verrühren oder vermahlen durchgeführt werden und durch alle gängigen dem Fachmann aus dem Stand der Technik bekannten Compoundierungsverfahren. Bevorzugt werden die Zusammensetzungen durch Dispergierung vermischt. Besonders bevorzugt werden die Zusammensetzungen durch Dispergierung vermischt und in einem weiteren Schritt durch Dispergierapparate vermahlen. Entsprechende Verfahren und Geräte, wie z.B. Perlmühlen oder Stator-Rotor Dispergierapparate, sind aus dem Stand der Technik dem Fachmann bekannt.

Im Allgemeinen wird die erfindungsgemäßen Zusammensetzung enthaltend Thiabendazol, mindestens ein Epoxid und mindestens ein iodhaltiges Fungizid in einer Menge von 0,1 bis 10 Gew.-%, vorzugsweise 0,2 bis 5,0 Gew.-%, bezogen auf das zu schützende Polymer, eingesetzt.

Im Allgemeinen wird die erfindungsgemäßen Zusammensetzung enthaltend Thiabendazol, mindestens ein Epoxid und mindestens ein iodhaltiges Fungizid in einer Menge von 0,1 bis 10 Gew.-%, vorzugsweise 0,2 bis 5,0 Gew.-%, bezogen auf das zu schützende Polyvinylchlorid, eingesetzt.

Weiterhin sind von der Erfindung polymere Produkte enthaltend thermoplastische Polymere, Thiabendazol, mindestens ein Epoxid und mindestens ein iodhaltiges Fungizid, umfasst. Insbesondere ist von der Erfindung eine Mischung aus Polyvinylchlorid, Thiabendazol, mindestens ein Epoxid und mindestens ein iodhaltiges Fungizid umfasst.

Die erfindungsgemäße Mischung bzw. das polymere Produkt aus mindestens einem thermoplastischen Polymer, insbesondere Polyvinylchlorid, Thiabendazol, mindestens ein Epoxid und mindestens ein iodhaltiges Fungizid wird nach den bekannten Verfahren weiter verarbeitet. Es wird verwendet zur Herstellung von Rohrleitungen, Kabeln, Draht-Ummantelungen, im Innenausbau, im Fahrzeug- und Möbelbau, in Bodenbelägen, medizinischen Artikeln, Lebensmittelverpackungen, Dichtungen, Planen, Folien, Verbundfolien, Folien für Verbundsicherheitsglas, insbesondere für den Fahrzeug-Bereich und den Architektur-Sektor, Kunstleder, Spielzeug, Verpackungsbehältern, Klebebandfolien, Bekleidung, Beschichtungen, sowie Fasern für Gewebe.

Die erfindungsgemäße Zusammensetzung eignet sich besonders zur Herstellung von Mischungen bzw. polymeren Produkten aus Polyvinylchlorid, Thiabendazol, mindestens ein Epoxid und mindestens ein iodhaltiges Fungizid, da die erfindungsgemäßen Zusammensetzungen eine hohe Stabilität aufweisen. Da die Zersetzung des iodhaltigen Fungizides verringert wird, weisen die erfindungsgemäßen Mischungen ebenfalls eine verbesserte Wirksamkeit auf.

Von der Erfindung ist ebenfalls die Verwendung der erfindungsgemäßen Zusammensetzung zum Schutz von Polymeren, insbesondere zum Schutz von Polyvinylchlorid, gegen den Befall oder die Zerstörung durch Microorganismen, umfasst.

Zudem ermöglicht die Erfindung, dass durch den Einsatz der Epoxide der ungesättigten Fettsäuren, Fettsäureester und Fettsäureglyceride auf die zusätzliche Verwendung von gegebenenfalls toxischen Weichmachern, wie beispielsweise Phthalate, verzichtet werden kann.

Zur Klarstellung sei angemerkt, dass vom Rahmen der Erfindung alle aufgeführten, allgemeinen oder in Vorzugsbereichen genannten Definitionen und Parameter in beliebigen Kombinationen umfasst sind.

### Beispiele

### Materialien und Abkürzungen

Luvotix^{®} R = hydriertes Rhizinusöl CAS-Nr. 8001-78-3 der Fa. Lehmann & Voss, Hamburg, Deutschland
Mesamoll^{®}= Alkylsulfonsäureester des Phenols
DINP = Diisononylphthalat
ESBO = Epoxidiertes Sojaöl CAS-Nr. 8013-07-8; Baerostab LSA, Fa. Baerlocher, Lingen, Deutschland
Vinnolit S 4170 = Suspensions-PVC für die thermoplastische Verarbeitung der Fa. Vinnolit GmbH & Co. KG, Deutschland
Irgastab^{®} CZ 11 = PVC Stabilisator auf Basis Calcium-Zinkcarboxylat
TBZ = Thiabendazol

### Vergleichsbeispiel 1

140,4 g Dichloroctylisothiazolinon (DCOIT) werden unter Rühren in 559,6 g Diisononylphthalat (DINP) gelöst. Man erhält 700 g einer gelben Lösung mit einem DCOIT Gehalt von 20 % (HPLC)

### Vergleichsbeispiel 2

140,0 g Octylisothiazolinon (OIT) werden unter Rühren in 560,0 g Diisononylphthalat (DINP) gelöst. Man erhält 700 g einer hellgelben Lösung mit einem OIT Gehalt von 20 % (HPLC)

### Beispiel 3

1,40g Luvotix^{®} R (Lehmann & Voss, Hamburg; hydriertes Rhizinusöl CAS-Nr. 8001-78-3), 28,13 g ESBO (Epoxidiertes Sojaöl; CAS-Nr. 8013-07-8) und 27 g Iodpropargylbutylcarbamat (IPBC) werden in 559,13 g Diisononylphthalat (DINP) gelöst, 135 g Thiabendazol (TBZ) am Dissolver eingearbeitet und 45min bei 4000U/min nachgerührt. Die flüssige Vordispersion wird dann zweimal über eine Kugelmühle (DYNO-Mühle Multi Lab) gemahlen. Man erhält eine stark thixotropierte, nach Aufrühren aber verarbeitbare Dispersion.
Ausbeute: 602 g
Viskosität: 1000mPas (30 l/s)
Gehalt (HPLC): 3,5% IPBC / 18,4% TBZ

Nach 2 Monaten Lagerung bei 40 °C ist keine Sedimentation zu beobachten.

### Beispiel 4 (Stabilisierung von Iodhaltigen Fungiziden)

### Dispersion 1

0,6g Luvotix^{®} R werden in 79,4 g Mesamol^{®} 1 gelöst, 120 g TBZ, weitere 400g Mesamoll^{®} dazu gegeben und am Dissolver eingearbeitet. Man rührt 45min bei 4000U/min nach.

Die flüssige Vordispersion wird dann zweimal über eine Kugelmühle (DYNO-Mühle Multi Lab) gefahren.
Man erhält 414g einer stark thixotropen, weißen Dispersion
Viskosität: 1533mPas/30,1 s
Gehalt (HPLC): 20% TBZ

### Stammdispersion (Beispiel 4-1)

50g Dispersion 1 werden mit 80 g einer 2,5%igen IPBC Lösung in Mesamoll^{®} gemischt.
Man erhält 130g einer Dispersion
Gehalt (HPLC): 7,69% TBZ / 1,54% IPBC

Zur Prüfung der stabilisierenden Wirkung von ESBO (Epoxidiertes Sojaöl) wurden hierzu die unten genannten Mengen an ESBO eingearbeitet und die erhaltenen Dispersionen vergleichend bei 40 °C gelagert:

**Tabelle 1 (Zusammensetzung der ESBO haltigen Dispersionen)**

| **Beispiel** | **Menge Stammdispersion [g]** | **Menge ESBO [g]** |
|---|---|---|
| 4-1 | 20 | - |
| 4-2 | 20 | 0,31 |
| 4-3 | 20 | 0,155 |
| 4-4 | 20 | 0,10 |
| 4-5 | 20 | 0,62 |
| 4-6 | 20 | 1,24 |

**Tabelle 2 (Lagerung der Formulierungen aus Tabelle 1 bei 40°C)**

| | **4-1** | **4-2** | **4-3** | **4-4** | **4-5** | **4-6** |
|---|---|---|---|---|---|---|
| Gehalt IPBC (Start) [%] | 1,4 | 1,4 | 1,4 | 1,4 | 1,4 | 1,4 |
| Gehalt IPBC (1 Monat 40°C) [%] | 1,0 | 1,5 | 1,5 | 1,4 | 1,5 | 1,4 |
| Gehalt IPBC (2 Monate 40°C) [%] | 0,02 | 1,5 | 1,5 | 1,5 | 1,5 | 1,4 |
| Gehalt TBZ (Start) [%] | 7,6 | 7,7 | 7,7 | 7,8 | 7,6 | 7,6 |
| Gehalt TBZ (1 Monat 40°C) [%] | 7,9 | 7,7 | 7,7 | 7,7 | 7,5 | 7,2 |
| Gehalt TBZ (2 Monate 40°C) [%] | 7,6 | 7,5 | 7,7 | 7,5 | 7,5 | 7,3 |

Die Dispersion 4-1 (ohne ESBO) zeigt bereits nach einem Monat Lagerung bei 40 °C eine starke braune Verfärbung, während die mit ESBO ausgerüsteten Dispersionen selbst nach 3 monatlicher Lagerung bei 40°C nur schwach gelblich verfärbt waren.

### Beispiel 5 (Einarbeitung der Dispersionen in PVC)

100 Teile Vinnolit S 4170
3,0 Teile Irgastab CZ 11
4,0 Teile ESBO (Epoxidiertes Sojaöl)
54 Teile DINP (Diisononylphthalat)
X Teile der erfindungsgemäßen Dispersion (s. Tabelle 3)
werden in einem Plastikbecher intensiv miteinander vermischt und anschließend über einen 180 °C warmen Kalander homogenisiert. Aus den erhaltenen, abgekühlten Fellen werden anschließend Prüfkörpern von 200 x 200 x 2 mm hergestellt.

**Tabelle 3 (Hersteller der PVC Prüfkörper)**

| **Bsp. Nr.** | **Eingesetzte Dispersion aus Bsp. Nr.** | **Teile in der PVC Rezeptur (s.o.)** | **Gesamtwirkstoffgehalt in ppm** |
|---|---|---|---|
| 5-1 | keine | 0 | 0 |
| 5-2 | 1 | 0,81 | 1000 |
| 5-3 | 1 | 0,60 | 750 |
| 5-4 | 2 | 0,81 | 1000 |
| 5-5 | 2 | 0,60 | 750 |
| 5-18 | 3 | 1,43 | 2000 |
| 5-19 | 3 | 1,07 | 1500 |
| 5-20 | 3 | 0,72 | 1000 |

### Beispiel 6 (Schimmelfestigkeit der PVC Proben)

Die Proben wurden in Anlehnung an ISO 846 auf ihre biologische Wirkung hin geprüft.

Die PVC-Muster aus Beispiel 26 werden jeweils in 2 x 2 cm Stücke geschnitten, ein Prüfkörper wird 120 h in fließendem Wasser gealtert, der andere ohne Vorbehandlung in die Prüfung gegeben.

Die Prüfkörper werden auf einen Malzagar (in Petrischalen) aufgelegt, der mit einer gemischten Sporensuspension aus Penicillium funicolosum (ATCC 36839), Chaetomium globosum (ATCC 6205), Trichoderma longibrachiatum (ATCC 9645), Paecilomyces variotii (ATCC 18502) und Aspergillus niger (ATCC 6275) kontaminiert ist und zwei Wochen bei 26 °C und 80 % rel. Luftfeuchtigkeit inkubiert.

Anschließend wird das Pilzwachstum auf den Agarplatten unter einer Stereolupe untersucht und gemäß dem folgenden Schema bewertet:

**Tabelle 4 (Bewertungsschema)**

| **Bewertung** | **Beschreibung** |
|---|---|
| 0 | unzureichende Schimmelfestigkeit Probe > 10 % überwachsen |
| 1 | moderate Schimmelfestigkeit Probe ist bis maximal 10 % überwachsen |
| 2 | gute Schimmelfestigkeit Probe nicht bewachsen oder nur am Rand, kein Hemmhof um den Prüfkörper |
| 3 | sehr gute Schimmelfestigkeit Probe nicht bewachsen, es ist ein Hemmhof um den Prüfkörper zu beobachten |

Für die geprüften Muster ergaben sich folgende Bewertungen:

**Tabelle 5 (Biologische Bewertung der Schimmelfestigkeit)**

| **Muster aus Bsp. Nr.** | **Bewertung ohne Wässerung** | **Bewertung nach Wässerung (120 h)** | **Gesamtwirkstoffgehalt in ppm** |
|---|---|---|---|
| 5-1 (Nullprobe) | 0 | 0 | 0 |
| 5-2 (Vergleich 1) | 0 | 0 | 1000 |
| 5-4 (Vergleich 2) | 1-2 | 0-1 | 1000 |
| 5-20 | 3 | 3 | 1000 |

## Patentansprüche

1. Zusammensetzung enthaltend Thiabendazol, dessen Salze oder Säureadditionsverbindungen, mindestens ein iodhaltiges Fungizid ausgewählt aus der Gruppe 3-Iod-2-propinyl-butylcarbamat (IPBC) und Diiodmethyl-p-tolylsulfon oder aus Mischungen dieser Fungizide und mindestens ein Epoxid ausgewählt aus der Gruppe der Trigylceride aus epoxidierten Fettsäuren deren Fettsäuren eine Kohlenstofflänge von 17 bis 23 C-Atomen aufweisen und mindestens eine Epoxidgruppen enthalten.

2. Zusammensetzung nach Anspruch 1, **dadurch gekennzeichnet, dass** die Epoxide ausgewählt sind aus der Gruppe Leinölepoxidate, Vernoniaölepoxidate, Sonnenblumenölepoxidate, Rhizunusölepoxidate und Sojaölepoxidate.

3. Polymeres Produkt enthaltend ein thermoplastisches Polymer und die Zusammensetzung gemäß Anspruch 1.

4. Polymeres Produkt gemäß Anspruch 3 enthaltend mindestens einen Weichmacher und mindestens ein Thixotropiermittel.

5. Polymeres Produkt gemäß Anspruch 3, **dadurch gekennzeichnet, dass** als Thixotropiermittel Triglyceride der Rizinolsäurederivate, der Rizinolsäure oder der hydrierten Rizinolsäure (12-Hydroxyocta-decansäure) deren Ester oder deren Amide sowie deren Salze eingesetzt werden.

6. Polymeres Produkt nach mindestens einem der Ansprüche 3 bis 5, **dadurch gekennzeichnet, dass** das thermoplastische Polymer Polyvinylchlorid ist.

7. Verfahren zur Herstellung der Polymere gemäß einem der Ansprüche 3 bis 8, **dadurch gekennzeichnet, dass** die Zusammensetzungen gemäß Anspruch 1 mit dem thermoplastischen Polymer vermischt und eingearbeitet werden.

8. Verwendung der Zusammensetzung gemäß Anspruch 1 zur Herstellung von gegen den Befall und die Zerstörung durch Mikroorganismen geschützten polymeren Produkten auf Basis thermoplastischer Polymere.

9. Verwendung der Zusammensetzungen gemäß Anspruch 1 zum Schutz von Polyvinylchlorid gegen den Befall und die Zerstörung durch Mikroorganismen.

## Claims

1. Composition comprising thiabendazole, its salts or acid addition compounds, at least one iodine-containing fungicide, which is selected from the group consisting of 3-iodo-2-propynyl butylcarbamate (IPBC) and diiodomethyl-p-tolylsulfone or from mixtures of these fungicides, and at least one epoxide selected from the group consisting of triglycerides of epoxidized fatty acids whose fatty acids have a carbon length of 17 to 23 carbon atoms and contain at least one epoxide group

2. Composition according to Claim 1, **characterized in that** the epoxides are selected from the group consisting of linseed oil epoxidates, vernonia oil epoxidates, sunflower oil epoxidates, castor oil epoxidates and soybean oil epoxidates.

3. Polymeric product comprising a thermoplastic polymer and the composition according to Claim 1.

4. Polymeric product according to Claim 3, comprising at least one plasticizer and at least one thixotropic agent.

5. Polymeric product according to Claim 3, **characterized in that** the thixotropic agents employed are triglycerides of castor oil derivatives, of ricinoleic acid or of hydrogenated ricinoleic acid (12-hydroxyoctadecanoic acid), their esters or their amides and also their salts.

6. Polymeric product according to at least one of Claims 3 to 5, **characterized in that** the thermoplastic polymer is polyvinyl chloride.

7. Process for preparing the polymeric product according to any of Claims 3 to 6, **characterized in that** the compositions according to Claim 1 are mixed with and incorporated into the thermoplastic polymer.

8. Use of the composition according to Claim 1 for preparing polymeric products which are based on thermoplastic polymers and protected against attack and destruction by microorganisms.

9. Use of the compositions according to Claim 1 for protecting polyvinyl chloride against attack and destruction by microorganisms.

## Revendications

1. Composition contenant du thiabendazole, ses sels ou ses composés d'addition acides, au moins un fongicide contenant de l'iode, qui est choisi dans le groupe constitué par le carbamate de 3-iodo-2-propynylbutyle (IPBC) et la diiodométhyl-p-tolylsulfone ou les mélanges de ces fongicides, et au moins un époxyde choisi dans le groupe constitué par les triglycérides d'acides gras époxydés dont les acides gras présentent une longueur de chaîne carbonée de 17 à 23 atomes C et contiennent au moins un groupe époxyde.

2. Composition selon la revendication 1, **caractérisée en ce que** les époxydes sont choisis dans le groupe constitué par les époxydates d'huile de lin, les époxydates d'huile de vernonia, les époxydes d'huile de tournesol, les époxydates d'huile de ricin et les époxydates d'huile de soja.

3. Produit polymère contenant un polymère thermoplastique et la composition selon la revendication 1.

4. Produit polymère selon la revendication 3, contenant au moins un plastifiant et au moins un agent thixotropique.

5. Produit polymère selon la revendication 3, **caractérisé en ce que** des triglycérides de dérivés de l'acide ricinoléique, de l'acide ricinoléique ou de l'acide ricinoléique hydrogéné (acide 12-hydroxyoctadécanoïque), leurs esters ou leurs amides, ainsi que leurs sels, sont utilisés en tant qu'agent thixotropique.

6. Produit polymère selon au moins l'une quelconque des revendications 3 à 5, **caractérisé en ce que** le polymère thermoplastique est le polychlorure de vinyle.

7. Procédé de fabrication des polymères selon l'une quelconque des revendications 3 à 6, **caractérisé en ce que** les compositions selon la revendication 1 sont mélangées et incorporées avec le polymère thermoplastique.

8. Utilisation de la composition selon la revendication 1 pour la fabrication de produits polymères à base de polymères thermoplastiques protégés contre l'infestation et la destruction par des microorganismes.

9. Utilisation des compositions selon la revendication 1 pour la protection de polychlorure de vinyle contre l'infestation et la destruction par des microorganismes.
